# EUROPEAN PATENT SPECIFICATION

(11) **EP 4 509 356 B1**
(45) Date of publication and mention of the grant of the patent: **25.03.2026**
(21) Application number: 24189057.3
(22) Date of filing: 17.07.2024
(51) Int. Cl.: B60N 3/02, E05C 19/00, E05C 19/06

(54) **SELF-ACTUATING ERGONOMIC SECONDARY SUPPORT HANDLE ASSEMBLY FOR LARGE MACHINES**
SELBSTTÄTIGE ERGONOMISCHE SEKUNDÄRE STÜTZGRIFFANORDNUNG FÜR GROSSE MASCHINEN
ENSEMBLE POIGNÉE DE SUPPORT SECONDAIRE ERGONOMIQUE À ACTIONNEMENT AUTOMATIQUE POUR GRANDES MACHINES

(30) Priority: 17.07.2023 IT 202300014886
(43) Date of publication of application: 19.02.2025
(73) Proprietor: CNH Industrial Italia S.p.A., 10156 Torino (IT)
(72) Inventor: RATHORE, Vikram, 110017 New Delhi (IN); KUMAR, Abhinav, 110017 New Delhi (IN)
(74) Representative: CNH Industrial IP Department

(56) References cited:
- EP-B1- 3 947 036
- CN-A- 112 937 265
- DE-U1- 202008 004 706
- US-A- 3 747 273
- US-A- 4 957 324
- US-B2- 11 420 689

## Description

### Field of the Invention

The present invention generally relates to support handles for large machines. More particularly, the present invention relates to a self-actuating ergonomic secondary support handle assembly for large machines.

### State of the art

Large machines deployed in agriculture industry or construction industry and large transportation vehicles such as trucks or buses are having the operator cabin at a certain height from the ground level as shown for example in DE202008004706U1 or EP3947036B1. For ingress/egress operation to and from the operator cabin in such large machines, there are provided few steps and support handles. A primary support handle attached to the cabin gives support to one hand of the operator during ingress/egress operation. However, due to the absence of such a support handle on the door side of the cabin, the operator has no support for his other hand during ingress/egress operation and has to take support of seat or plastic parts (console) of the large machine. Currently, in order to get support for the other hand of the operator during ingress/egress operation, short static secondary support handles have been provided on multiple locations of the door side of the cabin, but the operator has to stretch or extend himself to grab such secondary support handles or any kind of support through which he can lift his body which is not just uncomfortable but can also be dangerous. While egress, it is difficult for the operator to have support for the other hand with the available secondary static support handles during the last few steps. Also, the clearance between handrail of the secondary static handles and adjacent parts is generally less considering the integration of different parts in the door side of the cabin. It could result in safety issues and awkward postures with undesired bending for the operator. Also, with the available secondary static handles, it would be difficult for short people to have 3-point contact (3 parts out of 2 hands and 2 feet) during ingress/egress operation.

Also, after getting seated, the operator needs to have an extended reach to the door handle for closing of the door while sitting in the cabin and the operator must stand up from the seat to close the door.

Therefore, there is a need for an improved secondary support handle for large machines which can overcome the above mentioned disadvantages of known secondary support handles and door handles.

The present invention addresses the above mentioned problems, and provides a self-actuating ergonomic secondary support handle for large machines which solves the safety issues related to ingress/egress in a cabin by providing support for the operator in all his intermediate positions during ingress/egress operation and also acts as a door handle allowing the operator to easily close the door after getting seated.

### Objects of the Invention

It is therefore an object of the present invention to provide a self-actuating ergonomic secondary support handle assembly to solve the safety issues related to ingress/egress in the cabin of a large machine and to allow the operator to easily close the door after getting seated. The secondary support handle is self-actuated based on the door rotation.

It is a further object of the present invention to provide a secondary support handle assembly which can be self locked at a particular angle of rotation avoiding any chances of slipping and vibrations during ingress/egress operation.

It is another object of the present invention to provide a secondary support handle assembly to avoid multiple static handles provided on the cabin and the door to support ingress/egress operation and door opening/closing.

It is another object of the present invention to provide a secondary support handle assembly that can be integrated with any existing door without any major modifications.

It is another object of the present invention to provide a secondary support handle assembly which supports all the intermediate positions of the operator during the ingress/egress operation.

It is yet another object of the present invention to provide a cost saving secondary support handle assembly which is also improving the aesthetics of the cabin, by reducing the number of parts.

### Summary of the Invention

The present invention provides a secondary support handle assembly for large machines as claimed in the appended set of claims, thereby solving the aforementioned objects.**Brief**

### description of the figures

The above and other objects and features of the invention will become apparent from the following description of preferred embodiments taken in conjunction with the accompanying drawings, in which like reference numbers indicate like features.
- Fig. 1A illustrates a schematic view of a cabin of a large machine wherein the door and the secondary support handle according to an embodiment of the present invention are both in closed state.
- Fig. 1B illustrates a schematic view of a cabin of a large machine wherein the door and the secondary support handle according to an embodiment of the present invention are both in opened state.
- Fig. 2A illustrates a front view of the secondary support handle assembly according to the embodiment of the present invention when the door and the secondary support handle are in closed state.
- Fig. 2B illustrates an enhanced view of the portion P as shown in Fig. 2A.
- Fig. 2C illustrates a sectional view taken along X-X and seen in a direction A as shown in Fig. 2B.
- Fig. 3A illustrates a front view of the secondary support handle assembly according to the first embodiment of the present invention when the door and the secondary support handle are in opened state.
- Fig. 3B illustrates an enhanced view of the portion P as shown in Fig. 3A.
- Fig. 3C illustrates a sectional view taken along X-X and seen in a direction A as shown in Fig. 3B.
- Fig. 3D illustrates a schematic top view of Fig. 3A.
- Fig. 4A illustrates a schematic diagram of the secondary support handle attached to the geared hinges.
- Fig. 4B illustrates a schematic diagram of the geared hinges.
- Fig. 4C illustrates a schematic diagram of the gears of the geared hinges.
- Fig. 5A illustrates a front view of an alternative secondary support handle assembly not according to the present invention when the door and the secondary support handle are in closed state.
- Fig. 5B illustrates an enhanced view of the portion P as shown in Fig. 5A.
- Fig. 5C illustrates a sectional view taken along X-X and seen in a direction A as shown in Fig. 5B.
- Fig. 6A illustrates a front view of the alternative secondary support handle assembly not according to the present invention when the door and the secondary support handle are in opened state.
- Fig. 6B illustrates an enhanced view of the portion P as shown in Fig. 6A when the push handle is in unpressed condition.
- Fig. 6C illustrates an enhanced view of the portion P as shown in Fig. 6A when the push handle is in pressed condition.
- Fig. 6D illustrates a sectional view taken along X-X and seen in a direction A as shown in Fig. 6B or Fig. 6C.
- Fig. 6E illustrates a schematic top view of Fig. 6A.

### Detailed description of preferred embodiments of the invention

The preferred embodiment of the present invention will now be described more fully with reference to the accompanying drawings. The detailed description is not limiting the scope of the invention, which is defined only by the appended claims.

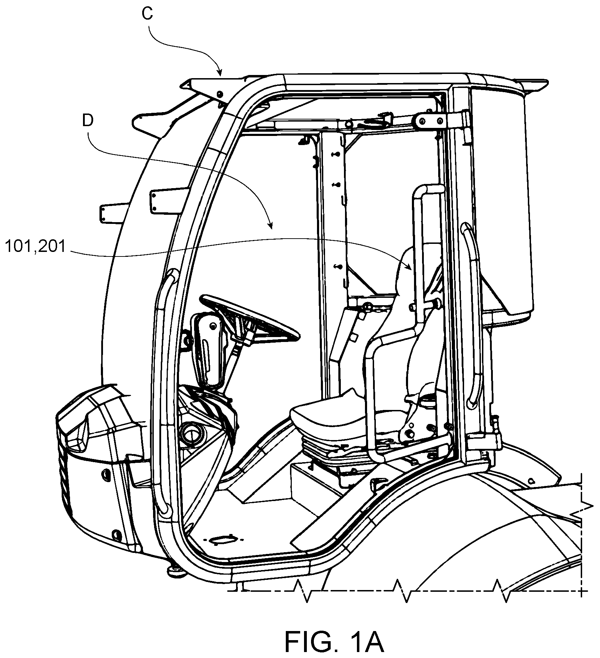

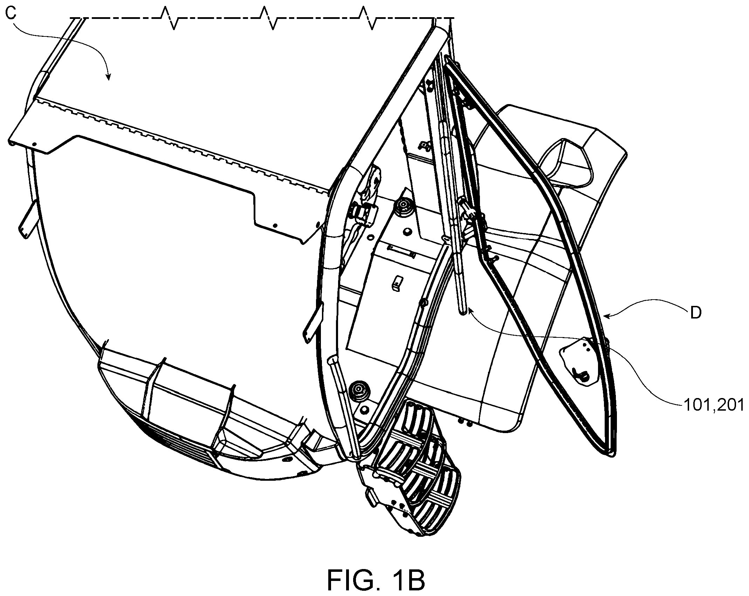

Fig. 1A illustrates a schematic view of the cabin C of a large machine wherein the door D and the secondary support handle 101 or 201 according to the present invention are both in closed state and Fig. 1B illustrates a schematic view of the cabin C of a large machine wherein the door D and the secondary support handle 101 or 201 according to the present invention are both in opened state.

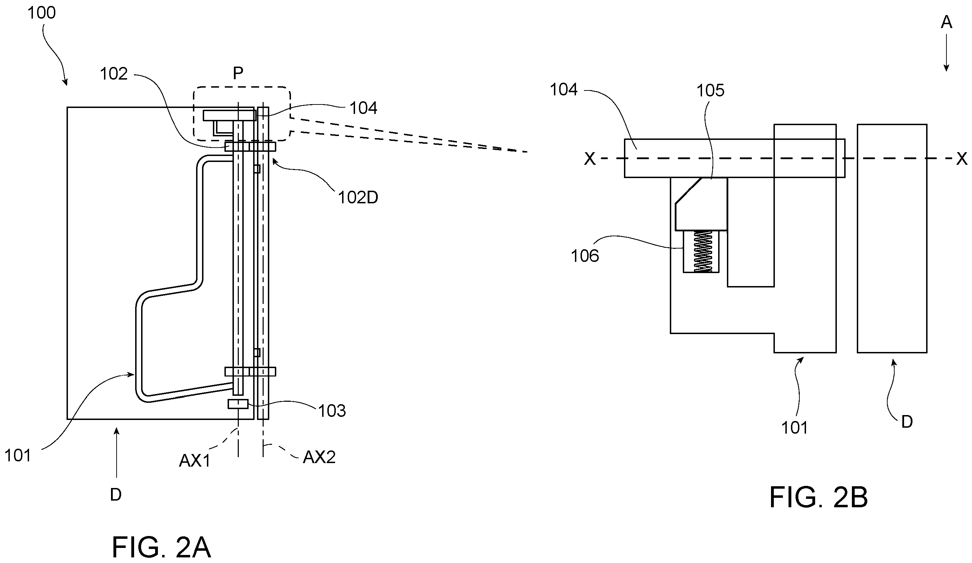

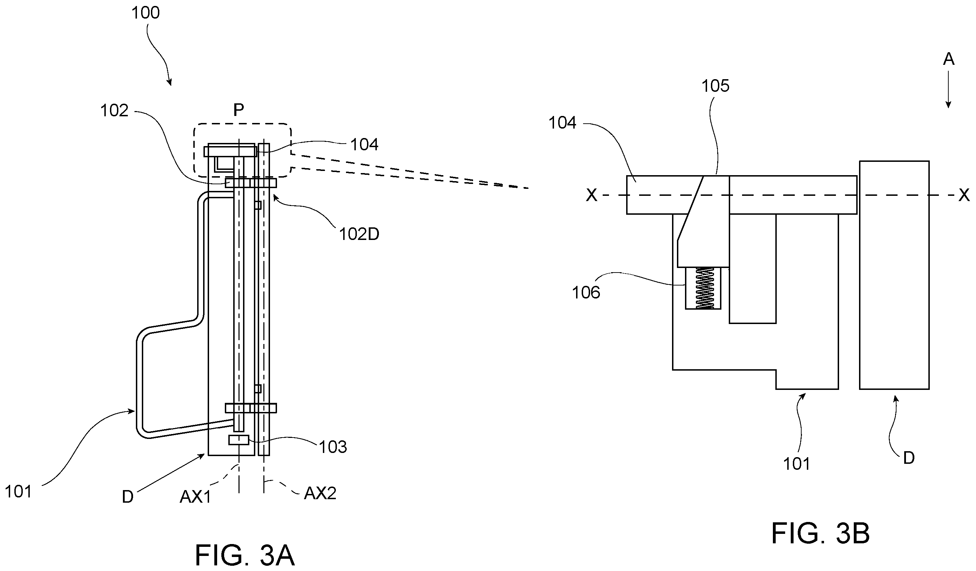

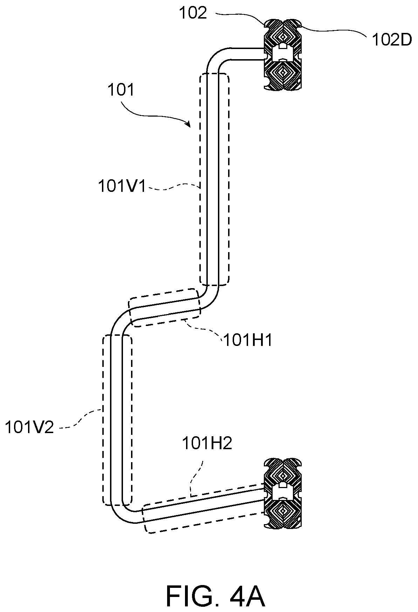

Fig. 2A and Fig. 3A illustrates a front view of the secondary support handle assembly 100 according to the embodiment of the present invention. The secondary support handle assembly 100 comprises a secondary support handle 101 having a pair of vertical and horizontal holding structures 101V1, 101V2 and 101H1, 101H2 respectively as shown in Fig. 4A. The vertical holding structure 101V1 is for supporting an operator of the large machine during ingress/egress operation when the operator is inside the cabin and the vertical holding structure 101V2 is for supporting the operator during ingress/egress operation when the operator is on outside steps of the large machine. The horizontal holding structure 101H1 will help in closing of the door D of the large machine as it would be closer to the operator seat and will not require stretch of arms. The secondary support handle 101 is thus very ergonomic and it facilitates easy ingress/egress during all the positions of the operator and easy closing of the door after getting seated.

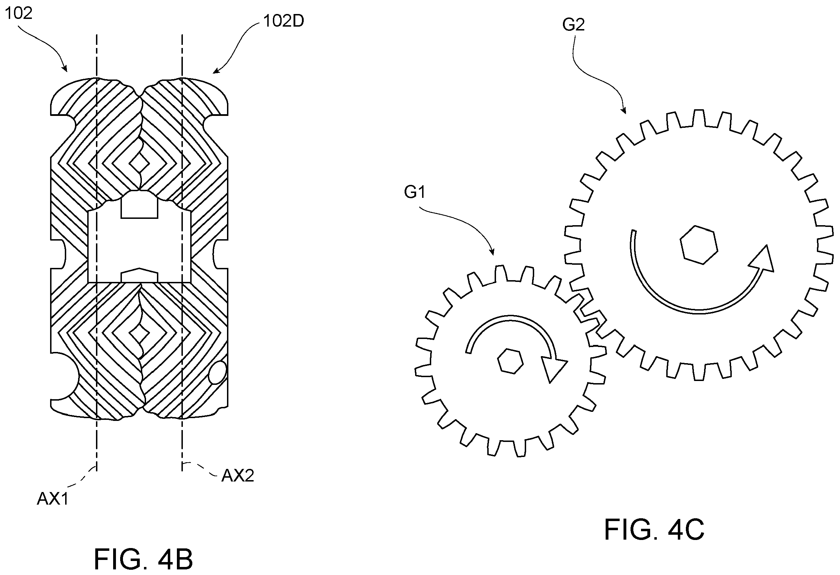

The secondary support handle assembly 100 further comprises a pair of geared hinges 102 coupled with a pair of geared hinges 102D of the door D in such a way that the axes of rotation of the secondary support handle and the door AX1 and AX2 are connected to each other, thereby providing relative rotation for the secondary support handle and the door. That is, rotation of one is governed by the other for a given gear ratio. For example, when the gear ratio between the geared hinges of the door and the secondary support handle assembly is 1:2, then the secondary support handle 101 rotates half the rotation of the door D. Fig. 4A illustrates a schematic diagram of the secondary support handle attached to the geared hinges 102 and 102D. The secondary support handle 101 is attached to the geared hinges 102 of the secondary support handle assembly at both ends. Fig. 4B illustrates a schematic diagram of the geared hinges 102 and 102D showing the axes of rotation of the secondary support handle and the door AX1 and AX2 respectively.

Further, Fig. 4C illustrates a schematic diagram of the gears G1 and G2 of the geared hinges 102D and 102 respectively, when the gear ratio is 1:2.

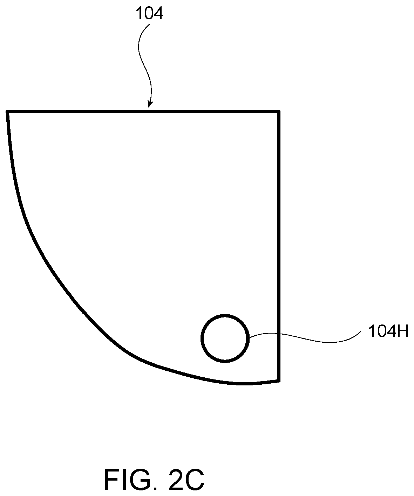

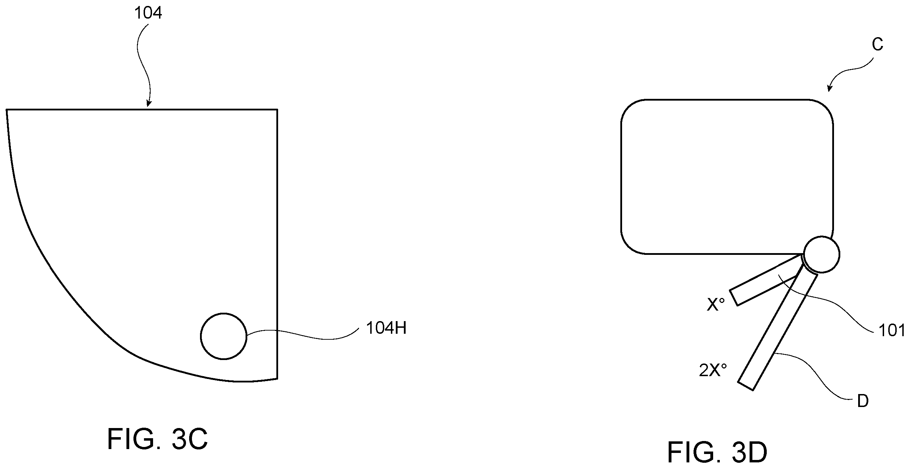

The secondary support handle assembly 100 further comprises a rotary joint 103 attached to the cabin C of the large machine about which the secondary support handle 101 rotates. The secondary support handle assembly 100 also comprises a plate 104 attached to the cabin C. The secondary support handle 101 is in contact with the plate 104 at one end through a telescopic tapered cylinder 105 and a spring 106 as shown in Fig. 2B and Fig. 3B. The plate 104 is having a hole 104H at a location representing an angle of rotation x of the secondary support handle 101 in the direction of opening the secondary support handle 101 as shown in Fig. 2C and Fig. 3C.

In Fig. 2A, the door D and the secondary support handle 101 are in closed state. As shown in Fig. 2B, the spring 106 is in compressed state and the telescopic tapered cylinder 105 is in continuous contact with the plate 104 when the door D and the secondary support handle 101 are in closed state. In Fig. 3A, the door D and the secondary support handle 101 are in opened state. When opening the door D, the secondary support handle 101 will also open due to coupling of their geared hinges 102D and 102 and while opening the secondary support handle 101, the telescopic tapered cylinder 105 rotates over the plate 104 in the direction of opening the secondary support handle and gets locked inside the hole 104H of the plate 104 at the said angle of rotation x of the secondary support handle 101 as shown in Fig. 3B and Fig. 3C. This self locking of the secondary support handle 101 helps to avoid any chances of slipping and vibrations when the operator holds the handle during ingress/egress. For example, the said angle of rotation x of the secondary support handle 101 can be fixed as 45° at which the secondary support handle 101 can be locked since 45° is the most convenient angle for an operator to hold the secondary support handle 101 during ingress/egress operation. Also, locking the secondary support handle 101 at an angle of rotation of 45° will enable the door to open up to 90° for a gear ratio of 1:2 as shown in Fig. 3D.

When closing the secondary support handle 101, the door D will also close due to coupling of their geared hinges 102D and 102 and while closing the secondary support handle 101, the telescopic tapered cylinder slides out of the hole 104H of the plate 104 by compressing the spring 106 and rotates over the plate 104 in the direction of closing the secondary support handle 101. Also, fixing the angle as 45° at which the secondary support handle gets locked helps the operator to conveniently close the secondary support handle and thereby the door after getting seated.

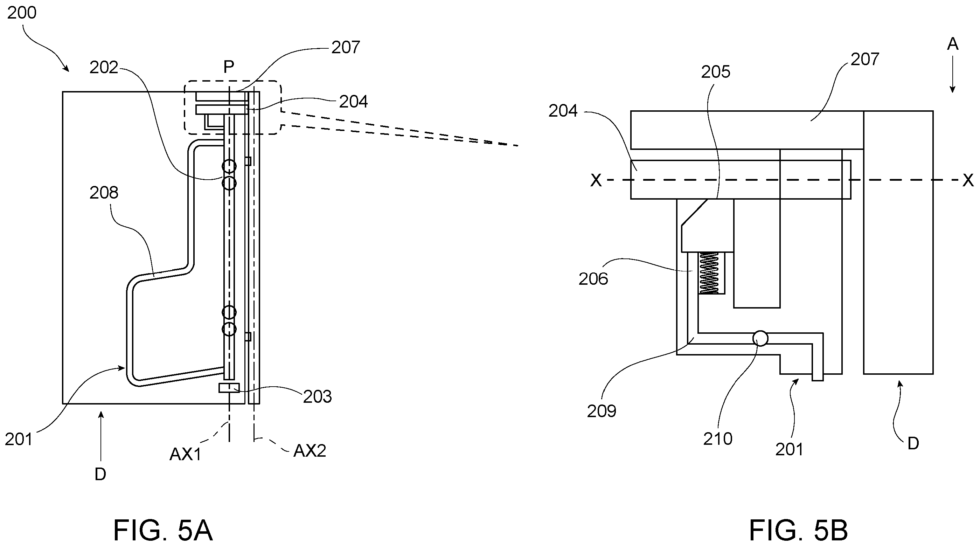

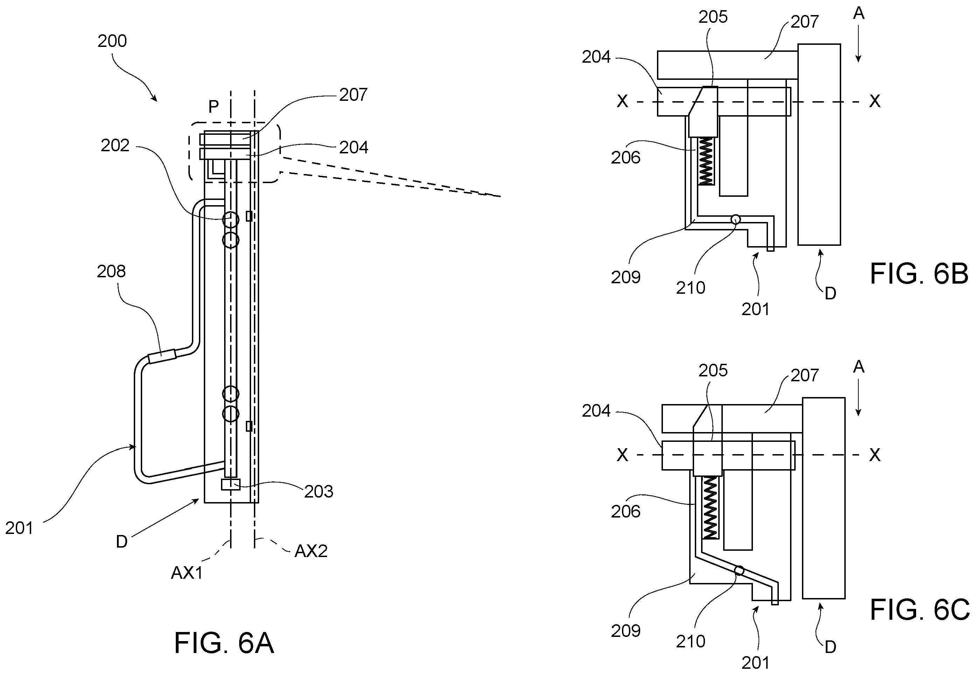

Fig. 5A and Fig. 6A illustrates a front view of an alternative secondary support handle assembly 200 not according to the present invention. The secondary support handle assembly 200 comprises a secondary support handle 201. The shape of the secondary support handle 201 is similar to that of the secondary support handle 101 according to the first embodiment to have a pair of vertical and horizontal holding structures as shown in Fig. 4A.

The secondary support handle assembly 200 further comprises a pair of torsional springs 202 connecting the secondary support handle 201 and the cabin C of the large machine. The torsional springs 202 are in stiffened state such that they have tendency to open the secondary support handle 201. The secondary support handle 201 is attached to the torsional springs 202 at both ends.

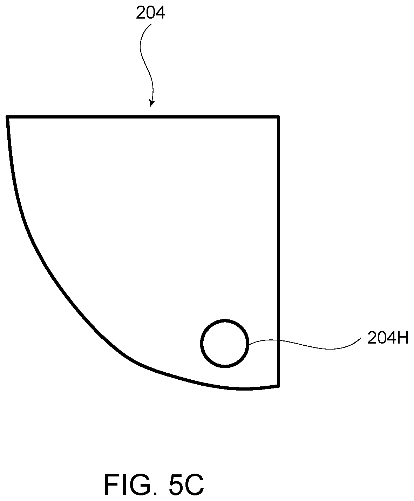

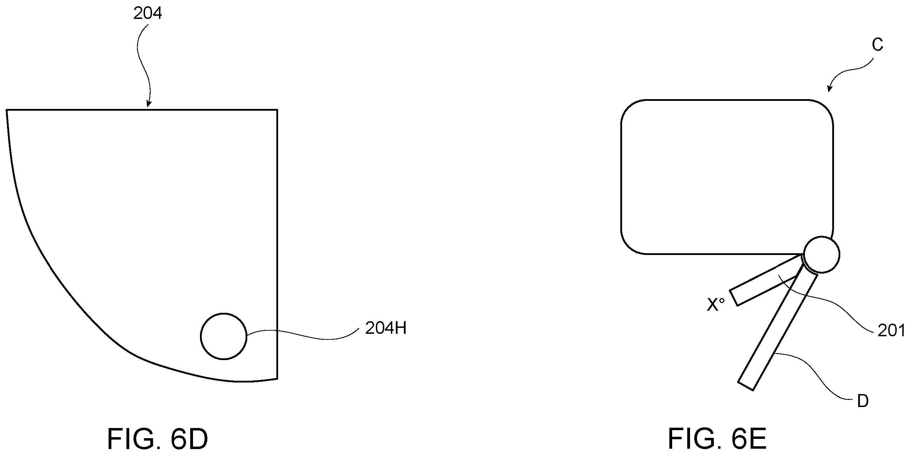

The secondary support handle assembly 200 further comprises a rotary joint 203 attached to the cabin C of the large machine about which the secondary support handle 201 rotates. The secondary support handle assembly 200 also comprises a first plate 204 attached to the cabin C. The secondary support handle 201 is in contact with the first plate 204 at one end through a telescopic tapered cylinder 205 and a spring 206 as shown in Fig. 5B and Fig. 6B. The plate 204 is having a hole 204H at a location representing an angle of rotation x of the secondary support handle 201 in the direction of opening the secondary support handle 201 as shown in Fig. 5C and Fig. 6D.

In Fig. 5A, the door D and the secondary support handle 201 are in closed state. As shown in Fig. 5B, the spring 206 is in compressed state and the telescopic tapered cylinder 205 is in continuous contact with the plate 204 when the door D and the secondary support handle 201 are in closed state. In Fig. 6A, the door D and the secondary support handle 201 are in opened state. When opening the door D, the secondary support handle 201 will also open due to the stiffness of the torsional springs 202 and while opening the secondary support handle 201, the telescopic tapered cylinder 205 rotates over the plate 204 in the direction of opening the secondary support handle 201 and gets locked inside the hole 204H of the first plate 204 at the said angle of rotation x of the secondary support handle 201 as shown in Fig. 6B and Fig. 6D. This self locking of the secondary support handle 201 helps to avoid any chances of slipping and vibrations when the operator holds the handle during ingress/egress. For example, the said angle of rotation of the secondary support handle 201 can be fixed as 45° at which the secondary support handle 201 can be locked since 45° is the most convenient angle for an operator to hold the secondary support handle 201 during ingress/egress operation.

When closing the secondary support handle 201, the telescopic tapered cylinder 205 slides out of the hole 204H of the first plate 204 by compressing the spring 206 and rotates over the first plate 204 in the direction of closing the secondary support handle 201.

In order to close the door D along with the secondary support handle 201, a second plate 207 attached to the door D and a push handle 208 attached to the secondary support handle 201 are provided. The second plate 207 is having a hole 207H such that the second plate 207 aligns parallelly above the first plate 204 and the respective holes 204H and 207H of the first and second plates 204 and 207 coincide with each other when the secondary support handle 201 is in the locked state.

Pressing the push handle 208 while closing the secondary support handle 201 actuates an arm 209 attached to the telescopic tapered cylinder 205 for rotating about a fulcrum 210 such that the telescopic tapered cylinder 205 further moves up by elongating the spring 206 and gets inserted in the hole 207H of the second plate 207, thereby closing the door D together with the secondary support handle 201. In Fig. 6B, the push handle 208 is in unpressed condition and in Fig. 6C, the push handle 208 is in pressed condition. Fig. 6E illustrates a schematic top view of Fig. 6A.

It should thus be appreciated that the exemplary embodiment of the present invention allows the operator of the large machine to conveniently perform the ingress/egress operation and easily close the door of the large machine after getting seated without requiring stretch of arms. It would result in the comfortable postures for the operator resulting in less fatigue. The embodiment formed in accordance with the present invention, therefore, can solve the safety issues related to ingress/egress in a cabin and to allow the operator to easily close the door.

Therefore, through the present invention, operator convenience can be enhanced. The ergonomic shape of the secondary support handle facilitates easy ingress/egress during all the positions of the operator. Also, the horizontal structure of the secondary support handle will help in closing of the door easily as it would be closer to the operator seat and will not require stretch of arms. The secondary support handle assembly according to the embodiment of the present invention can be easily integrated with any existing door without any major modifications. Also, it self-actuates based on the main door rotation. Self-locking of the secondary support handle avoids any chances of slipping and vibrations. It is cost saving as multiple static handles provided on the door and the cabin to support ingress/egress operation and door closing/opening can be avoided. It also improves the aesthetics of the cabin, by reducing the number of parts.

It is understood therefore that the present invention is defined within the scope of the appended claims.

## Claims

1. A self-actuating ergonomic secondary support handle assembly (100) of a cabin (C) with cabin doors (D) of large machines, the secondary support handle assembly (100) comprising:
a secondary support handle (101);
a pair of geared hinges (102) attached to the secondary support handle (101) and coupled with a pair of geared hinges (102D) of the door (D) of the large machine, the geared hinges of the secondary support handle (101) and the geared hinges of the door (102D) connect axes of rotation (AX1, AX2) of the secondary support handle and the door, thereby providing relative rotation for the secondary support handle (101) and the door (D);
a rotary joint (103) attached to the cabin (C) of the large machine about which the secondary support handle (101) rotates; and
a plate (104) attached to the cabin (C);
wherein,
the secondary support handle (101) is attached to the geared hinges (102) of the secondary support handle assembly (100) at both ends and is in contact with the plate (104) at one end,
the secondary support handle (101) is in contact with the plate (104) through a telescopic tapered cylinder (105) and a spring (106), the spring (106) being in compressed state and the telescopic tapered cylinder (105) being in continuous contact with the plate (104) when the door (D) and the secondary support handle (101) are in closed state,
the plate (104) is having a hole (104H) at a location representing an angle of rotation (x) of the secondary support handle (101) in a direction of opening the secondary support handle (101),
when opening the door (D), the secondary support handle (101) opens due to coupling of the geared hinges (102, 102D), the telescopic tapered cylinder (105) rotates over the plate (104) in the direction of opening the secondary support handle (101) and gets locked inside the hole (104H) of the plate (104) at the said angle of rotation (x) of the secondary support handle (101), and
when closing the secondary support handle (101), the door (D) closes due to coupling of the geared hinges, the telescopic tapered cylinder (105) slides out of the hole (104H) of the plate (104) by compressing the spring (106) and rotates over the plate (104) in the direction of closing the secondary support handle (101).

2. The secondary support handle assembly (100) according to claim 1, wherein the secondary support handle (101) comprises a pair of vertical and horizontal holding structures (101V1, 101V2; 101H1, 101H2).

3. The secondary support handle assembly (100) according to claims 1 or 2, wherein a gear ratio between the geared hinges (102, 102D) of the door and the secondary support handle assembly is 1:2 such that the secondary support handle (101) rotates half the rotation of the door (D).

4. The secondary support handle assembly (100) according to any one of the preceding claims, wherein the angle of rotation (x) of the secondary support handle (101) is 45°.

5. A large machine comprising a secondary support assembly in accordance with any one of the preceding claims.

## Patentansprüche

1. Selbstbetätigende ergonomische sekundäre Stützgriffanordnung (100) einer Kabine (C) mit Kabinentüren (D) von Großmaschinen, wobei die sekundäre Stützgriffanordnung (100) umfasst:
einen sekundären Stützgriff (101);
ein Paar von Zahnradscharnieren (102), die an dem sekundären Stützgriff (101) befestigt und mit einem Paar von Zahnradscharnieren (102D) der Tür (D) der Großmaschine gekoppelt sind, wobei die Zahnradscharniere des sekundären Stützgriffs (101) und die Zahnradscharniere der Tür (102D) Drehachsen (AX1, AX2) des sekundären Stützgriffs und der Tür verbinden, wodurch eine Relativdrehung für den sekundären Stützgriff (101) und die Tür (D) bereitgestellt wird;
ein Drehgelenk (103), das an der Kabine (C) der Großmaschine befestigt ist, um welches sich der sekundäre Stützgriff (101) dreht; und
eine an der Kabine (C) befestigte Platte (104);
worin
der sekundäre Stützgriff (101) an beiden Enden an den Zahnradscharnieren (102) der sekundären Stützgriffanordnung (100) befestigt ist und an einem Ende mit der Platte (104) in Kontakt steht,
der sekundäre Stützgriff (101) mit der Platte (104) durch einen teleskopischen konischen Zylinder (105) und eine Feder (106) in Kontakt steht, wobei sich die Feder (106) in komprimiertem Zustand befindet und der teleskopische konische Zylinder (105) in kontinuierlichem Kontakt mit der Platte (104) steht, wenn sich die Tür (D) und der sekundäre Stützgriff (101) in geschlossenem Zustand befinden,
die Platte (104) ein Loch (104H) an einer Stelle aufweist, die einen Rotationswinkel (x) des sekundären Stützgriffs (101) in einer Richtung des Öffnens des sekundären Stützgriffs (101) darstellt,
beim Öffnen der Tür (D) sich der sekundäre Stützgriff (101) aufgrund der Kopplung der Zahnradscharniere (102, 102D) öffnet, der teleskopische konische Zylinder (105) sich über die Platte (104) in Richtung des Öffnens des sekundären Stützgriffs (101) dreht und im Loch (104H) der Platte (104) bei dem besagten Drehwinkel (x) des sekundären Stützgriffs (101) verriegelt wird, und
beim Schließen des sekundären Stützgriffs (101) sich die Tür (D) aufgrund der Kopplung der Zahnradscharniere schließt, der teleskopische konische Zylinder (105) aus dem Loch (104H) der Platte (104) herausgleitet, indem er die Feder (106) zusammendrückt und über die Platte (104) in Richtung des Schließens des sekundären Stützgriffs (101) rotiert.

2. Sekundäre Stützgriffanordnung (100) nach Anspruch 1, worin der sekundäre Stützgriff (101) ein Paar von vertikalen und horizontalen Haltestrukturen (101V1, 101V2; 101H1, 101H2) umfasst.

3. Sekundäre Stützgriffanordnung (100) nach Anspruch 1 oder 2, worin ein Übersetzungsverhältnis zwischen den Zahnradscharnieren (102, 102D) der Tür und der sekundären Stützgriffanordnung 1:2 beträgt, so dass der sekundäre Stützgriff (101) die Hälfte der Drehung der Tür (D) dreht.

4. Sekundäre Stützgriffanordnung (100) nach einem der vorangehenden Ansprüche, worin der Rotationswinkel (x) des sekundären Stützgriffs (101) 45° beträgt.

5. Großmaschine, umfassend eine sekundäre Stützanordnung nach einem der vorangehenden Ansprüche.

## Revendications

1. Ensemble poignée de support secondaire (100) ergonomique à actionnement automatique d'une cabine (C) avec des portes de cabine (D) de grandes machines, l'ensemble poignée de support secondaire (100) comprenant :
une poignée de support secondaire (101) ;
une paire de charnières à engrenages (102) fixées à la poignée de support secondaire (101) et accouplées à une paire de charnières à engrenages (102D) de la porte (D) de la grande machine, les charnières à engrenages de la poignée de support secondaire (101) et les charnières à engrenages de la porte (102D) relient des axes de rotation (AX1, AX2) de la poignée de support secondaire et de la porte, assurant ainsi une rotation relative pour la poignée de support secondaire (101) et la porte (D) ;
une articulation rotative (103) fixée à la cabine (C) de la grande machine autour de laquelle tourne la poignée de support secondaire (101) ; et
une plaque (104) fixée à la cabine (C) ;
dans lequel,
la poignée de support secondaire (101) est fixée aux charnières à engrenages (102) de l'ensemble poignée de support secondaire (100) au niveau des deux extrémités et est en contact avec la plaque (104) au niveau d'une extrémité,
la poignée de support secondaire (101) est en contact avec la plaque (104) par l'intermédiaire d'un cylindre conique télescopique (105) et d'un ressort (106), le ressort (106) étant à l'état comprimé et le cylindre conique télescopique (105) étant en contact continu avec la plaque (104) lorsque la porte (D) et la poignée de support secondaire (101) sont à l'état fermé,
la plaque (104) présente un trou (104H) à un emplacement représentant un angle de rotation (x) de la poignée de support secondaire (101) dans une direction d'ouverture de la poignée de support secondaire (101),
lors de l'ouverture de la porte (D), la poignée de support secondaire (101) s'ouvre sous l'effet de l'accouplement des charnières à engrenages (102, 102D), le cylindre télescopique conique (105) tourne sur la plaque (104) dans le sens d'ouverture de la poignée de support secondaire (101) et se bloque à l'intérieur du trou (104H) de la plaque (104) audit angle de rotation (x) de la poignée de support secondaire (101), et
lors de la fermeture de la poignée de support secondaire (101), la porte (D) se ferme du fait de l'accouplement des charnières à engrenages, le cylindre conique télescopique (105) coulisse hors du trou (104H) de la plaque (104) en comprimant le ressort (106) et tourne sur la plaque (104) dans le sens de fermeture de la poignée de support secondaire (101).

2. Ensemble poignée de support secondaire (100) selon la revendication 1, dans lequel la poignée de support secondaire (101) comprend une paire de structures de maintien verticales et horizontales (101V1, 101V2 ; 101H1, 101H2).

3. Ensemble poignée de support secondaire (100) selon les revendications 1 ou 2, dans lequel un rapport d'engrenage entre les charnières à engrenages (102, 102D) de la porte et l'ensemble poignée de support secondaire est de 1:2 de telle sorte que la poignée de support secondaire (101) tourne la moitié de la rotation de la porte (D).

4. Ensemble poignée de support secondaire (100) selon l'une quelconque des revendications précédentes, dans lequel l'angle de rotation (x) de la poignée de support secondaire (101) est de 45°.

5. Grande machine comprenant un ensemble de support secondaire selon l'une quelconque des revendications précédentes.
